# EUROPÄISCHE PATENTSCHRIFT

(11) **EP 1 174 297 B1**
(45) Veröffentlichungstag und Bekanntmachung des Hinweises auf die Patenterteilung: **12.07.2006**
(21) Anmeldenummer: 01115772.4
(22) Anmeldetag: 10.07.2001
(51) Int. Cl.: B60J 7/06

(54) **Schiebeverdeckdach für ein Fahrzeug**
Sliding cover for a vehicle roof
Bâche coulissante pour toit de véhicule

(30) Priorität: 19.07.2000 DE 10035103
(43) Veröffentlichungstag der Anmeldung: 23.01.2002
(73) Patentinhaber: Kögel Fahrzeugwerke GmbH, 89349 Burtenbach (DE)
(72) Erfinder: Volz, Siegfried, 89610 Oberdischingen (DE); Weigand, Jürgen, 89079 Ulm (DE)
(74) Vertreter: HOFFMANN EITLE

(56) Entgegenhaltungen:
- EP-A- 0 444 733
- EP-A- 0 835 799
- EP-A- 0 925 975
- EP-A- 1 008 476
- WO-A-00/32429
- DE-U- 9 417 255

## Beschreibung

### TECHNISCHES GEBIET

Die vorliegende Erfindung betrifft ein Schiebeverdeckdach mit einem Außenrahmenprofil für ein Fahrzeug mit einem Hauptschenkel und einem längsgestreckten Nebenprofilschenkel. Üblicherweise werden derartige Außenrahmenprofile verwendet, um den Aufbau eines Fahrzeuges, vorzugsweise eines Lastkraftfahrzeuges oder eines Anhängers, im Kantenbereich zwischen Seitenwänden und/oder Dach- und Seitenwänden zu verbinden.

### AUSGANGSPUNKT DER VORLIEGENDEN ERFINDUNG

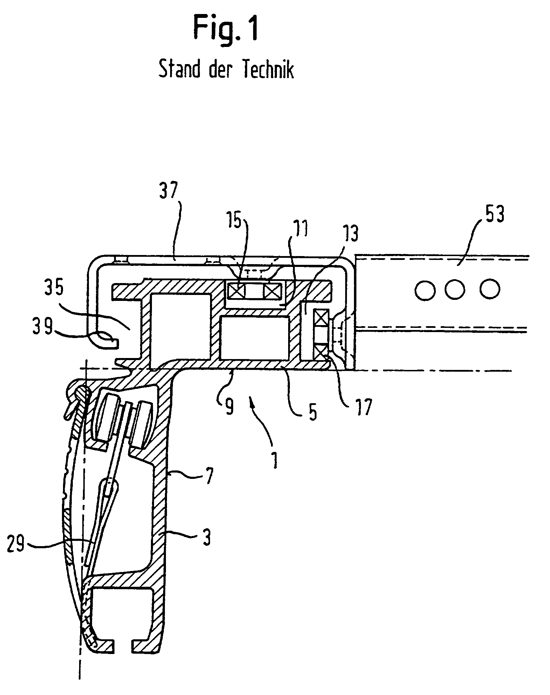

Der Ausgangspunkt der vorliegenden Erfindung ist in Fig. 1 dargestellt. Fig. 1 zeigt ein der Anmelderin intern bekanntes Außenrahmenprofil, das als Ganzes mit 1 bezeichnet ist. Das Außenrahmenprofil ist mit einem Hauptprofilschenkel 3 und einem Nebenprofilschenkel 5 versehen. Der Hauptprofilschenkel 3 weist eine Innenseite 7, der Nebenprofilschenkel eine Innenseite 9 auf. Im typischen Einsatz des dargestellten Außenrahmenprofils begrenzt der Winkel, der zwischen den Innenseiten 7, 9 von Hauptprofilschenkel 3 und Nebenprofilschenkel 5 eingeschlossen wird, den nutzbaren Frachtraum eines Lastkraftfahrzeuges oder eines Anhängers.

Der Hauptprofilschenkel 3 setzt sich in dem in Fig. 1 dargestellten Beispiel in einer Schiebeplane 29, der Nebenprofilschenkel 5 in einem Schiebeverdeck 53 fort. Um das Schiebeverdeck gegenüber dem Außenrahmenprofil 1 und somit gegenüber dem Lastkraftfahrzeug oder Anhänger beweglich zu gestalten, ist es über Führungsrollen 15 und 17 längsverschieblich gelagert. Die Führungsrollen 15 und 17 sind an einem Laufwagen 37 befestigt, der sich an beiden Enden eines Querspriegels des Schiebeverdecks befindet, und laufen in dem Außenrahmenprofil 1 in entsprechenden Führungseinrichtungen 11, 13. Die Führungseinrichtung 11 stellt sicher, dass sich das Schiebeverdeck 53 in Richtung der Längserstreckung des Außenrahmenprofils 1, d.h. in Fig. 1 rechtwinklig zur Blattebene, nicht aber rechtwinklig zu dieser Längserstreckung in der Ebene des Schiebeverdecks 53 bewegen kann. Auf ähnliche Weise stellt die Führungseinrichtung 13 sicher, dass das Schiebeverdeck 53 in Längsrichtung des Außenrahmenprofils 1 verfahren kann, nicht aber in einer Richtung rechtwinklig zur Ebene des Schiebeverdecks 53 beweglich ist. Der Laufwagen 37 endet in einem Fanghaken 39, der in eine entsprechende Aufnahme 35 in dem Außenrahmenprofil 1 eingreift. Bei einem Versagen der Führungsrollen 15, 17 dient der Eingriff des Fanghakens 39 in die Aufnahme 35 als Sicherheitsmaßnahme.

Ferner offenbart die EP-A-1 008 476 ein Außenrahmenprofil, wie es im Oberbegriff von Anspruch 1 enthalten ist.

### DARSTELLUNG DER ERFINDUNG

Der vorliegenden Erfindung liegt das Problem zugrunde, die Raumausnutzung von Fahrzeugen zu erhöhen, bei denen Außenrahmenprofile zum Einsatz kommen.

Diese Aufgabe wird durch ein Schiebeverdeckdach mit den Merkmalen von Anspruch 1 gelöst. Vorteilhafte Weiterbildungen sind in den Unteransprüchen angegeben.

So weist gemäß der vorliegenden Erfindung ein Außenrahmenprofil eines Schiebeverdeckdachs für ein Fahrzeug einen Hauptschenkel und einen längserstreckten Nebenprofilschenkel auf. Die Schenkel weisen Innenseiten auf, die wiederum einen Winkel einschließen. Das Außenrahmenprofil weist ferner zwei Führungseinrichtungen für längsbewegliche Führungselemente auf, von denen eine Höhenführungseinrichtung Stabilität in Richtung des Hauptschenkels und eine Seitenführungseinrichtung Stabilität in Richtung des Nebenprofilschenkels verleiht. Die Bezeichnungen "Höhe" und "Seite" wurden gewählt, um zu verdeutlichen, dass es sich um zwei unterschiedliche Richtungen handelt, ohne die Führungseinrichtungen auf eine besondere Lage oder Ausrichtung einzuschränken, beispielsweise gegenüber der Erdanziehungskraft. Erfindungsgemäß ist die Höhenführungseinrichtung in einem Bereich des Außenrahmenprofils angeordnet, der von der Spitze des eingeschlossenen Winkels aus in Richtung des Hauptschenkels liegt.

Hieraus wird deutlich, dass die vorliegende Erfindung allgemein auf dem Grundgedanken beruht, diejenige Führungseinrichtung, die Stabilität in Richtung des Hauptschenkels verleiht, aus dem Bereich weg zu verlagern, der als Laderaum benutzt werden kann, d.h. in typischer Einbaulage des Außenrahmenprofils diese Führungseinrichtung nach "außen" zu verlagern.

Diese Formgebung des erfindungsgemäßen Außenrahmenprofils ermöglicht es, die Profilstärke und somit die Bauhöhe des Nebenprofilschenkels des Nebenprofilschenkels zu verringern, ohne die Abmessungen der zugeordneten Führungselemente zu beeinträchtigen. Des weiteren ermöglicht die erfindungsgemäße Anordnung der Höhenführungseinrichtung stärkere Freiheitsgrade der Bewegung von üblicherweise befestigten Dachaufbauten in gewünschten Richtungen. Zugleich wird durch die erfindungsgemäße Anordnung die Steifheit des erfindungsgemäßen Außenrahmenprofils gegenüber bekannten Profilen nicht beeinträchtigt, und ist ausreichend, um eine einwandfreie Funktion mit einem Hubdach, auch einem einseitig anhebbaren, zu gewährleisten.

Der erfindungsgemäß erzielte Raumgewinn ist insbesondere bei in ihren Außenmaßen gesetzlich begrenzten Fahrzeugen und Fahrzeugaufbauten beachtlich, bei denen der durch die Erfindung zur Verfügung gestellte zusätzlich nutzbare Raum ein Aufeinanderstapeln von drei Gitterboxen der üblichen Standardgröße ermöglicht. Dies ist bei maximalen Außenabmessungen der Fahrzeug- bzw. Fahrzeugaufbauten mit einer Konstruktion gemäß Fig. 1 nicht möglich. Zugleich wird erfindungsgemäß die Bauhöhe des Hauptschenkels nicht beeinträchtigt, so dass der nutzbare Laderaum diesbezüglich ebenfalls nicht beeinträchtigt wird.

Ferner umfasst das Außenrahmenprofil gemäß der vorliegenden Erfindung eine zumindest bereichsweise an der Stirnseite des Nebenprofilschenkels verlaufende Aufnahme, in die ein Fanghaken eingreift. Hierdurch kann bei Bestätigungen des Außenrahmenprofils, der Führungsrollen oder dergleichen ein Kollabieren des Fahrzeugaufbaus durch einen Eingriff zwischen Fanghaken und Aufnahme verhindert werden.

Es ist gemäß der vorliegenden Erfindung besonders bevorzugt, die Höhenführungseinrichtung an der Seite des Hauptschenkels anzuordnen, die der Innenseite des Hauptschenkels gegenüberliegt. Durch diese bevorzugte Ausgestaltung ist nicht nur ein besonders günstiger Kompromiss zwischen größtmöglicher Raumausnutzung, guten Festigkeits- und Steifheitseigenschaften des Außenrahmenprofils und einem großen Freiheitsgrad der Bewegung vom eventuellen Dachaufbau erzielt, sondern das Außenrahmenprofil gemäß dieser bevorzugten Ausgestaltung ist in den unterschiedlichsten Einbausituationen kompatibel zu bestehenden Ausrüstungen.

Um den nutzbaren Laderaum bestmöglichst den Standardladegütern und Ladegebinden anzupassen, ist bevorzugt vorgesehen, dass die Innenseiten von Hauptschenkel und Nebenprofilschenkel einen rechten Winkel einschließen.

Die Führungseinrichtungen des Nebenprofilschenkels sind gemäß einer bevorzugten Weiterbildung der Erfindung im Wesentlichen U-förmig. Auf diese Weise wird ein einfaches Einbringen der Führungselemente in die Führungseinrichtungen mit einer sicheren und zuverlässigen Führung kombiniert.

Das erfindungsgemäße Außenrahmenprofil ist für einen Einsatz in modernen Fahrzeugen und Fahrzeugaufbauten, die beispielsweise Schiebeplanen oder dergleichen aufweisen, dann besonders gut geeignet, wenn auch der Hauptschenkel als Profil ausgebildet ist und zumindest eine Führungseinrichtung für Führungselemente aufweist.

So ist gemäß einer bevorzugten Weiterbildung dieser Ausführungsform vorgesehen, dass der Hauptprofilschenkel eine Führungseinrichtung für Führungselemente einer Schiebeplane und eine Führungseinrichtung für Führungselemente einer Schieberunge aufweist, und beide Führungselemente in einer gemeinsamen Ebene des Hauptprofilschenkels angeordnet sind. Diese Anordnung der beiden Führungseinrichtungen übereinander bzw. nebeneinander ermöglicht es, die Raumausnutzung in der Richtung rechtwinklig zur Ebene des Hauptprofilschenkels zu maximieren, ohne die zulässigen Außenmaße zu überschreiten.

Eine Ausbildung der Führungseinrichtungen des Hauptprofilschenkels im Wesentlichen C-förmig reduziert den Freiheitsgrad der linearen Bewegungen der Führungselemente auf die einzig gewünschte Schieberichtung von Schiebeplanen und dergleichen.

Eine einfache Fertigung und eine hohe Widerstandsfähigkeit gegen Witterungseinflüsse des erfindungsgemäßen Außenrahmenprofils wird gemäß einer bevorzugten Weiterbildung dann besonders gut erzielt, wenn es aus stranggepresstem Aluminium ausgebildet ist, für die Montage ist es dann besonders günstig, wenn es einstückig ausgebildet ist.

Eine Weiterbildung der Erfindung sieht vor, dass das Außenrahmenprofil eine in Richtung der Längserstreckung des Nebenprofilschenkels verlaufend Klebefolie umfasst. Diese Klebefolie ermöglicht es beispielsweise in Kombination mit einem festen Dachaufbau, eine sichere Klebeverbindung herzustellen, wobei die Klebefuge zusätzlich die Funktion einer Dichtung übernehmen kann, so dass sogar eine wasserdichte Verbindung ohne zusätzliche Maßnahmen erzielbar ist.

Die Montage von gegebenenfalls vorzusehenden Abdeckungen und deren sichere Befestigung wird gemäß einer Weiterbildung der Erfindung dann erreicht, wenn das Außenrahmenprofil eine hakenförmige Aufnahme für eine Profilabdeckung aufweist, die am Nebenprofilschenkel angeordnet ist, und/oder eine hakenförmige Aufnahme für eine Profilabdeckung aufweist, die an dem Hauptschenkel angeordnet ist.

### KURZE BESCHREIBUNG DER ZEICHNUNGEN

Im Folgenden werden Ausführungsbeispiele der vorliegenden Erfindung unter Bezugnahme auf die beigefügten Zeichnungen näher ausgeführt und erläutert, in denen:
- Fig. 1: den Ausgangspunkt der vorliegenden Erfindung darstellt,
- Fig. 2: ein erstes Ausführungsbeispiel der Erfindung in einer Schnittansicht,
- Fig. 3: ein zweites Ausführungsbeispiel der vorliegenden Erfindung in einer Schnittansicht darstellt.

### AUSFÜHRLICHE BESCHREIBUNG BEVORZUGTER AUSFÜHRUNGSFORMEN DER ERFINDUNG

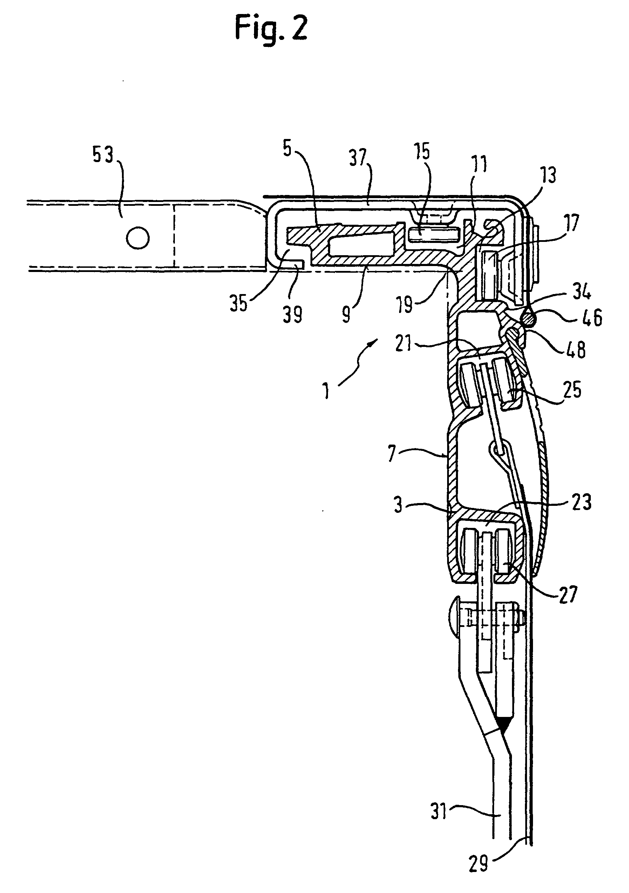

Fig. 1 zeigt den eingangs beschriebenen Ausgangspunkt der vorliegenden Erfindung. In den Fig. 2 bis 3 sind gleiche oder vergleichbare Bauteile mit den gleichen Bezugszeichen wie in Fig. 1 bezeichnet.

Fig. 2 zeigt ein erfindungsgemäßes Außenrahmenprofil 1 in einer schematischen Schnittansicht. Das Außenrahmenprofil 1 wird im Wesentlichen durch einen vertikalen Hauptprofilschenkel 3 und einen horizontalen Nebenprofilschenkel 5 bestimmt. Die Begriffe "horizontal" und "vertikal" beziehen sich dabei auf die typische Einbaulage des Außenrahmenprofils 1 in einem Fahrzeug oder Fahrzeugaufbau, wobei sich die Fahrzeuglängsachse und die Richtung der Längserstreckung des Außenrahmenprofils 1 senkrecht zur Zeichenebene in den Figuren erstreckt.

Der horizontale Nebenprofilschenkel 5 weist eine Innenseite 9 auf, der vertikale Hauptprofilschenkel 3 eine Innenseite 7. Die Innenseiten 7, 9 schließen einen Winkel ein, dessen Spitze in Fig. 2 mit 19 bezeichnet ist. In der typischen Einbausituation und der typischen Verwendung des Außenrahmenprofils 1 bestimmt dieser Winkel die äußere obere Ecke des zur Verfügung stehenden Laderaums. Wie klar aus den Fig. 2 bis 3 hervorgeht, ist der Hauptprofilschenkel 7 des Außenrahmenprofils 1 im Bereich der Spitze 19 des von den Innenseiten 7, 9 eingeschlossenen Winkels mit einer Außenlinie versehen, die es ermöglicht, die im Laderaum gestapelten Gegenstände an eine klar definierte Wand angrenzen zu lassen, ohne dass sich störende Kollisionen im Bereich der Spitze 19 ergeben.

Obgleich gemäß den bevorzugten Ausführungsformen in den Figuren der Hauptschenkel als Profilschenkel 7 dargestellt ist, kann die Erfindung auch mit Außenrahmenprofilen 1 verwirklicht werden, bei denen der Hauptschenkel ohne besondere Profilierung ausgebildet ist. Die Begriffe "oben", "unten", "innen", "außen" und dergleichen dienen so, wie sie vorliegend verwendet werden, lediglich zur Bezeichnung relativer Lagen, und nicht zu einer weiteren Einschränkung des Außenrahmenprofils 1.

In Fig. 2 ist mit 53 ein Schiebeverdeck bezeichnet, das sich relativ zum Außenrahmenprofil 1 in den Richtungen senkrecht zur Zeichenebene in den Figuren verschieben lässt. Das Schiebeverdeck 53 ist mittels eines Laufwagens 37 und Führungsrollen 15 und 17 an dem Außenrahmenprofil 1 befestigt. Des weiteren weist der Laufwagen 37 einen Fanghaken 39 auf, der in eine entsprechende Aufnahme 35 des Außenrahmenprofils 1 eingreift. Bei Beschädigungen des Außenrahmenprofils 1, der Führungsrollen 15, 17 oder dergleichen verhindert der Eingriff zwischen Fanghaken 39 und Aufnahme 35 ein Kollabieren des Fahrzeugaufbaus.

Die Führungsrollen 15 und 17 laufen in entsprechenden Aufnahmen 11 und 13 des Außenrahmenprofils. Die Aufnahme 11 sieht eine Stabilität der Führung des Schiebeverdecks 53 in einer Richtung rechtwinklig zur Längserstreckung des Außenrahmenprofils 1 und in der Ebene des Schiebeverdecks 53 vor, die Aufnahme 13 stellt eine Stabilität dieser Führung in einer Richtung rechtwinklig zur Längserstreckung des Außenrahmenprofils 1 und in der Ebene des Hauptprofilschenkels 3 bereit. In Kombination dieser beiden Führungen ist eine lineare Bewegung des Schiebeverdecks 53 ausschließlich in den gewünschten Richtungen senkrecht zur Zeichenebene, d.h. in der Richtung der Längserstreckung des Außenrahmenprofils 1 möglich.

Um eine möglichst leichtgängige Bedienung des Schiebeverdecks 53 bereitzustellen, ist es wünschenswert, die Führungsrollen 15, 17 mit möglichst großem Durchmesser zu gestalten. Gemäß der bevorzugten Ausführungsform der Erfindung, die in Fig. 2 dargestellt ist, ist die Führungseinrichtung 13 für die Führungsrolle 17 in den Bereich des Außenrahmenprofils 1 angeordnet, der von der Spitze 19, d.h. der Grenze des nutzbaren Laderaums aus in Richtung des Hauptschenkels 3 liegt. Im Ausführungsbeispiel 2 ist sie auf der Außenseite des Hauptschenkels 3 angeordnet, es ist jedoch ebenfalls möglich, die Führung weiter im äußeren Bereich oder im oberen Bereich des Nebenprofilschenkels 5 anzuordnen. Durch diese relativ zum Ausgangspunkt der Fig. 1 erzielte Verlagerung der Führungseinrichtung 13 und der Führungseinrolle 17 nach außen wird es ermöglicht, die Bauhöhe des Nebenprofilschenkels 5 erheblich zu reduzieren. Auf diese Weise ist es möglich, bei vollständiger Ausnutzung der gesetzlich zulässigen Außenabmessungen von Fahrzeugen und Fahrzeugaufbauten einen nutzbaren Ladeinnenraum zu erzielen, in dem drei Gitterboxen mit Standardabmessungen aufeinandergestapelt werden können. Dies war zuvor nicht der Fall. Gleichzeitig ermöglicht es die Anordnung der Führungseinrichtung 13 und somit der Führungsrolle 17 auf der Außenseite des Hauptprofilschenkels 3, den Durchmesser der Rolle 17 vergleichsweise groß zu gestalten und erhöht den Freiheitsgrad der Rotationsbewegung des Schiebeverdecks 53 um ungefähr die Spitze 19 des von den Innenseiten 7, 9 eingeschlossenen Winkels. Dies kann vorteilhaft sein, damit nicht ordnungsgemäß beladenes Frachtgut nicht den Verlauf der im Schiebeverdeck 53 enthaltenen Querspriegel entlang der Längsrichtung des Außenrahmenprofils 1 behindert.

Der Hauptprofilschenkel 3 ist ausweislich der Fig. 2 mit C-förmigen Führungen 21 und 23 für Führungsrollen 25 und 27 versehen. Diese Aufnahmen und folglich die Führungsrollen liegen im Wesentlichen in einer gemeinsamen Ebene, d.h. sie sind übereinander angeordnet, was die Bauhöhe des Hauptprofilschenkels 3 auf ein Minimum reduziert. Über die Führungsrolle 25 rollt die Schiebeplane 29 in der Führung 21 in Längsrichtung des Außenrahmenprofils 1 ab, über die Führungsrolle 27 rollt die Schieberunge 31 in der Führung 23 ebenfalls in Längsrichtung des Außenrahmenprofils ab.

Der Nebenprofilschenkel 7 ist im Bereich der Höhenführungseinrichtung 13 mit einer Nase 34 versehen. Diese zusätzliche Nase bildet einen sich längs erstreckenden Vorsprung und ist ausgerichtet, so dass ein Einsetzen der Führungsrolle 17 in die Höhenführungseinrichtung 13 noch möglich ist, gleichzeitig aber die Führungseinrichtung 13 abgeschirmt ist. Auf diese Weise wird verhindert, dass eventuell eindringendes Wasser zur Laufrolle gelangt, und die Laufrolle ist somit geschützt. In Fig. 2 ist mit 48 eine ebenfalls vorspringende Hakenaufnahme für ein Drehprofil bezeichnet, deren Funktion weiter unten erläutert wird. Im Zusammenhang mit Fig. 2 geht jedoch hervor, dass die Hakenaufnahme 48 zugleich als Auflage für einen Planenkeder 46 ausgebildet ist. Diese Berührung zwischen Planenkeder und Hakenaufnahme 48 dient ebenfalls zum Schutz der Laufrolle 17 gegen eintretenden Schmutz und eintretendes Wasser. Insofern übernehmen die Nase 34 und die abdichtende Berührung zwischen Planenkeder 46 und Hakenaufnahme 48 eine doppelte Schutzfunktion für Höhenführungseinrichtung 13 und Laufrolle 17.

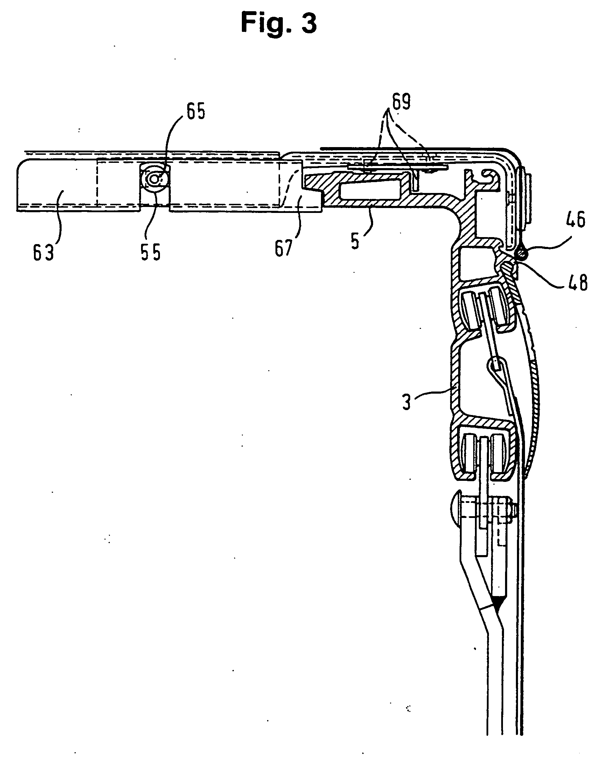

In Fig. 3 ist eine weitere Einsatzmöglichkeit des Außenrahmenprofils dargestellt. An dem Nebenprofilschenkel 5 des Außenrahmenprofils ist über geeignete Befestigungselemente 69 und den Eingriff eines Vorsprungs in die Aufnahme 35 für den Fanghaken (vgl. Fig. 2) ein Endstück 67 für die Befestigung eines Spriegels 63 angebracht. Das Endstück 67 weist eine Befestigungsöse 55 auf, in der ein geeignet gesicherter Stecker 65 befestigt ist. Der Stecker 65 greift zugleich in entsprechende Ösen des Spriegels 63 ein und befestigt somit den Spriegel 63 lösbar an dem Endstück 67 und mittelbar an dem Außenrahmenprofil. Diese Art der Befestigung eines Dachaufbaus ist besonders kostengünstig. Durch einfaches Herausziehen des Sicherungssteckers kann eine an Querspriegeln 63 befestigte Dachplane zusammen mit den Spriegeln in Richtung der Längserstreckung des Außenrahmenprofils aufgerollt werden, wodurch das Fahrzeug bzw. der Fahrzeugaufbau von oben beladen werden kann.

## Patentansprüche

1. Schiebeverdeckdach für ein Fahrzeug, umfassend ein Außenrahmenprofil (1) mit einem Hauptschenkel (3) und einem längserstreckten Nebenprofilschenkel (5), die mit ihren Innenseiten (7, 9) einen Winkel einschließen, und ferner mit zwei Führungseinrichtungen (11, 13) für längsbewegliche Führungselemente (15, 17), von denen eine Höhenführungseinrichtung (13) Stabilität in Richtung des Hauptschenkels (3) und eine Seitenführungseinrichtung (11) Stabilität in Richtung des Nebenprofilschenkels (5) verleiht, bei dem die Höhenführungseinrichtung (13) in einem Bereich des Außenrahmenprofils (1) angeordnet ist, der von der Spitze (19) des eingeschlossenen Winkels aus in Richtung des Hauptschenkels (3) liegt,
**dadurch gekennzeichnet, dass**
das Außenrahmenprofil weiterhin eine zumindest bereichsweise an der Stirnseite des Nebenprofilschenkels (5) verlaufende Aufnahme (35) umfasst, in die ein Fanghaken (39) eingreift.

2. Schiebeverdeckdach nach Anspruch 1, **dadurch gekennzeichnet, dass** die Höhenführungseinrichtung (13) an der der Innenseite (7) des Hauptschenkels (3) gegenüberliegenden Seite angeordnet ist.

3. Schiebeverdeckdach nach Anspruch 1 oder 2, **dadurch gekennzeichnet, dass** die Innenseiten (7, 9) von Hauptschenkel (3) und Nebenprofilschenkel (5) einen rechten Winkel einschließen.

4. Schiebeverdeckdach nach mindestens einem der vorhergehenden Ansprüche, **dadurch gekennzeichnet, dass** die Führungseinrichtungen (11, 13) des Nebenprofilschenkels (5) im wesentlichen U-förmig sind.

5. Schiebeverdeckdach nach mindestens einem der vorhergehenden Ansprüche, **dadurch gekennzeichnet, dass** auch der Hauptschenkel (3) als Profil ausgebildet ist.

6. Schiebeverdeckdach nach Anspruch 5, **dadurch gekennzeichnet, dass** der Hauptprofilschenkel (3) eine Führungseinrichtung (21) für Führungselemente (25) eine Schiebeplane (29) und eine Führungseinrichtung (23) für Führungselemente (27) eine Schieberunge (31) aufweist, und beide Führungselemente (25, 27) in einer gemeinsamen Ebene des Hauptprofilschenkels (3) angeordnet sind.

7. Schiebeverdeckdach nach Anspruch 5 oder 6, **dadurch gekennzeichnet, dass** die Führungseinrichtungen (25, 27) des Hauptprofilschenkels (3) im Wesentlichen C-förmig sind.

8. Schiebeverdeckdach nach mindestens einem der vorhergehenden Ansprüche, **dadurch gekennzeichnet, dass** das Außenrahmenprofil aus stranggepresstem Aluminium ausgebildet ist.

9. Schiebeverdeckdach nach mindestens einem der vorhergehenden Ansprüche, **dadurch gekennzeichnet, dass** das Außenrahmenprofil einstückig ausgebildet ist.

10. Schiebeverdeckdach nach mindestens einem der vorhergehenden Ansprüche, **dadurch gekennzeichnet, dass** das Außenrahmenprofil weiterhin eine in Richtung der Längserstreckung des Nebenprofilschenkels (5) verlaufende Klebefuge (33) umfasst.

11. Schiebeverdeckdach nach mindestens einem der vorhergehenden Ansprüche, **dadurch gekennzeichnet, dass** das Außenrahmenprofil weiterhin ein an dem Nebenprofilschenkel (5) angeordnetes Befestigungselement (41) für einen Spriegel (63) umfasst.

12. Schiebeverdeckdach nach mindestens einem der vorhergehenden Ansprüche, **dadurch gekennzeichnet, dass** das Außenrahmenprofil weiterhin eine an dem Nebenprofilschenkel (5) angeordnete hakenförmige Aufnahme (43) für eine Profilabdeckung (45) und/oder eine an dem Hauptschenkel (3) angeordnete hakenförmige Aufnahme (48) für eine Profilabdeckung (49) umfasst.

## Claims

1. Sliding canvas roof for a vehicle, including an outer frame profile (1) with a main arm (3) and a longitudinally extending auxiliary profile arm (5), which with their inner sides (7, 9) form an angle, and further with two guide devices (11, 13) for longitudinally movable guide elements (15, 17) of which a vertical guide device (13) affords stability in the direction of the main arm (3) and a lateral guide device (11) affords stability in the direction of the auxiliary profile arm (5), in which the vertical guide device (13) is arranged in a region of the outer frame profile (1) which from the apex (19) of the angle formed is located in the direction of the main arm (3),
**characterised in that**
the outer frame profile further includes a receptacle (35) which in at least one region runs on the front side of the auxiliary profile arm (5) and in which engages a catch hook (39).

2. Sliding canvas roof according to claim 1, **characterised in that** the vertical guide device (13), is arranged on the side opposite the inner side (7) of the main arm (3).

3. Sliding canvas roof according to claim 1 or 2, **characterised in that** the inner sides (7, 9) of main arm (3) and auxiliary profile arm (5) form a right angle.

4. Sliding canvas roof according to one or more of the preceding claims, **characterised in that** the guide devices (11, 13) of the auxiliary profile arm (5) are substantially U-shaped.

5. Sliding canvas roof according to one or more of the preceding claims, **characterised in that** the main arm (3) too is designed as a profile.

6. Sliding canvas roof according to claim 5, **characterised in that** the main profile arm (3) has a guide device (21) for guide elements (25), a sliding tarpaulin (29) and a guide device (23) for guide elements (27) of a sliding upright (31), and both guide elements (25, 27) are arranged in a common plane of the main profile arm (3).

7. Sliding canvas roof according to claims 5 or 6, **characterised in that** the guide devices (25, 27) of the main profile arm (3) are substantially C-shaped.

8. Sliding canvas roof according to one or more of the preceding claims, **characterised in that** the outer frame profile is formed from extruded aluminium.

9. Sliding canvas roof according to one or more of the preceding claims, **characterised in that** the outer frame profile is constructed in one piece.

10. Sliding canvas roof according to one or more of the preceding claims, **characterised in that** the outer frame profile further includes a glue joint (33) running in the direction of the longitudinal extent of the auxiliary profile arm (5).

11. Sliding canvas roof according to one or more of the preceding claims, **characterised in that** the outer frame profile further includes a fastening element (41) arranged on the auxiliary profile arm (5) for a frame arch (63).

12. Sliding canvas roof according to one or more of the preceding claims, **characterised in that** the outer frame profile further includes a hook-shaped receptacle (43) arranged on the auxiliary profile arm (5) for a profile cover (45) and/or a hook-shaped receptacle (48) arranged on the main arm (3) for a profile cover (49).

## Revendications

1. Bâche coulissante pour toit de véhicule, comprenant un profilé de cadre extérieur (1), avec une branche principale (3) et une branche annexe de profilé (5) s'étendant longitudinalement, faisant, avec ses faces intérieures (7, 9), un angle, et, en outre avec deux dispositifs de guidage (11, 13) pour des éléments de guidage (15, 17) mobiles longitudinalement, dont un dispositif de guidage en hauteur (13) confère de la stabilité en direction de la branche principale (3), et un dispositif de guidage latéral (11) confère de la stabilité en direction de la branche annexe de profilé (5), pour lequel le dispositif de guidage en hauteur (13) est disposé dans une zone du profilé de cadre extérieur (1) située en direction de la branche principale (3) depuis la pointe (19) de l'angle inclus,
**caractérisé en ce que**
le profilé de cadre extérieur comprend en outre un logement (35) s'étendant au moins par zones sur la face frontale de la branche annexe de profilé (5), logement dans lequel s'engage une crosse (39).

2. Bâche coulissante pour toit de véhicule selon la revendication 1, **caractérisé en ce que** le dispositif de guidage en hauteur (13) est disposé sur la face opposée à la face intérieure (7) de la branche principale (3).

3. Bâche coulissante pour toit de véhicule selon la revendication 1 ou 2, **caractérisé en ce que** les faces intérieures (7, 9), de la branche principale (3) et de la branche de profilé annexe (5), font un angle droit.

4. Bâche coulissante pour toit de véhicule selon au moins l'une des revendications précédentes, **caractérisé en ce que** les dispositifs de guidage (11, 13) de la branche annexe de profilé (5) sont sensiblement en forme de U.

5. Bâche coulissante pour toit de véhicule selon au moins l'une des revendications précédentes, **caractérisé en ce que** la branche principale (3) est également réalisée sous forme de profilé.

6. Bâche coulissante pour toit de véhicule selon la revendication 5, **caractérisé en ce que** la branche principale de profilé (3) présente un dispositif de guidage (21) pour les éléments de guidage,(25), une bâche coulissante (29) et un dispositif de guidage (23) pour des éléments de guidage (27), une languette de coulisseau (31), et les deux éléments de guidage (25, 27) sont disposés dans un plan commun de la brariche principale de profilé (3).

7. Bâche coulissante pour toit de véhicule selon la revendication 5 ou 6, **caractérisé en ce que** les dispositifs de guidage (25, 27) de la branche principale de profilé (3) sont sensiblement en forme de C.

8. Bâche coulissante pour toit de véhicule selon au moins l'une des revendications précédentes, **caractérisé en ce que** le profilé de cadre extérieur est réalisé en aluminium extrudé.

9. Bâche coulissante pour toit de véhicule selon au moins l'une des revendications précédentes, **caractérisé en ce que** le profilé de cadre extérieur est réalisé d'une seule pièce.

10. Bâche coulissante pour toit de véhicule selon au moins l'une des revendications précédentes, **caractérisé en ce que** le profilé de cadre extérieur comprend en outre un joint collé (33), s'étendant dans la direction de l'étendue longitudinale de la branche annexe de profilé (5).

11. Bâche coulissante pour toit de véhicule selon au moins l'une des revendications précédentes, **caractérisé en ce que** le profilé de cadre extérieur comprend en outre un élément de fixation (41), disposé sur la branche annexe de profilé (5), pour un arceau (63).

12. Bâche coulissante pour toit de véhicule selon au moins l'une des revendications précédentes, **caractérisé en ce que** le profilé de cadre extérieur comprend en plus un logement (43) en forme de crochet, disposé sur la branche annexe de profilé (5), pour un recouvrement de profilé (45), et/ou un logement (48) en forme de crochet, disposé sur la branche principale (3), pour un recouvrement de profilé (49).
